# EUROPEAN PATENT APPLICATION

(11) **EP 1 503 200 A1**
(43) Date of publication of application: **02.02.2005**
(21) Application number: 04017700.8
(22) Date of filing: 27.07.2004
(51) Int. Cl.: G01M 3/26

(54) **Electronic sensor to detect leaks based on the measurement of a pressure drop**

(30) Priority: 30.07.2003 IT mo20030028
(71) Applicant: Tomassini, Alessandro, 41037 Mirandola (IT)
(72) Inventor: Tomassini, Alessandro, 41037 Mirandola (IT)
(74) Representative: Guareschi, Antonella

(57) **Abstract**

The invention relates to a sensor complete with electronic circuitry, designed for the direct piloting of electro-pneumatic valves and intended for the complete management of tightness tests in the case of absolute pressure drop in industrial environments and plant engineering and in gas transmission networks.

Of particular note are the highly robustness and compact size, thanks to its technical characteristics.

## Description

The invention relates to a new device composed of everything necessary for the direct piloting of electro-pneumatic pressurisation valves and for the execution of tightness tests in compressed air operating on the absolute pressure drop principle. Each element for the measurement and handling of the test is contained within a single metal element, therefore rendering the device complete, safe and innovative in comparison with those currently available on the market.

A variety of types of electro-pneumatic instruments are currently known and used which are designed to measure, for test purposes, the tightness of the recipients. These instruments are essentially composed of a pneumatic section, at least one pressure transducer, electronic circuits designed to interpret the pressure value of the object undergoing testing as drop value, and display elements such as monitors and signal lamps indicating passed and rejected. With particular reference to instruments for application in automatic machines or however, those which are not supervised by an operator, it can be seen that the application of these instruments limits their application due to the cost and the overall dimensions.

The aim of this invention is to construct an electronic sensor which is compact, economic and intended for the complete management of the cycle of tightness tests.

The innovative aspect consists in the highly compact nature of the device, the essentiality of the test results and operating parameter signals, which are limited to three LEDs to signal the test results and operation, and a serial port designed to communicate, by means of wires, with the special display and programming element. This serial port is designed to connect, within a network, up to 100 (one hundred) of the said sensors, to a display and programming element. The direct piloting of the test pressurisation solenoid valves and the low voltage parallel-type signals ensure the invention operates autonomously and is easily fitted and low-cost. The computerised connection (either a microprocessor panel or software resident in a personal computer) is only necessary for the test and operation parameter setting functions and for the optional monitoring, but the device, once programmed, is designed to operate autonomously.

In more detail, the device is essentially composed of:
- a metal container, cylindrical in form, containing all the elements described
- a pneumatic union for the pressure measurement
- an electropenumatic transducer pressure meter
- an electronic circuit comprising all the sections necessary to measure the pressure, manage the tests, manage the serial communication, power pilot the live external solenoid valves, pilot the interface signals (passed/rejected output, test in progress, stand-by, start/stop inputs) a Flash-type memory containing the operating software and an EEROM-type memory containing the test and operation parameters downloaded via the serial port.
- Three LEDs for signalling passed, rejected and test in progress.
- A connection connector with the necessary electric signals.

The figures shown highlight the sensor in question, which appears to be built like a common pressure transmitter, therefore its peculiar features can be found in the implementation cycle during the performance of a tightness test.

The said drawings therefore show both the parts of which the sensor is composed and the main operating principles of the management software loaded in the Flash controller, i.e.:

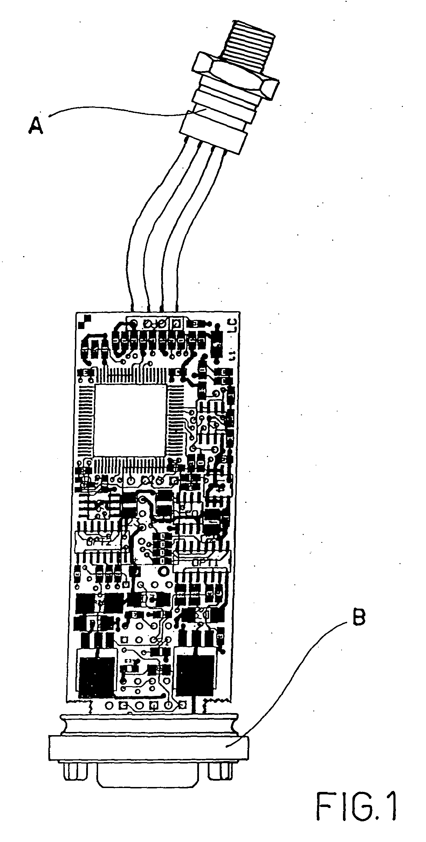

- Figure 1 shows an overall view of the internal system, composed of the pressure transducer A, with a scale which can be set in the installation phase at between 1 and 200 Bar and the only electronic card attached to the cap B which seals the container body;

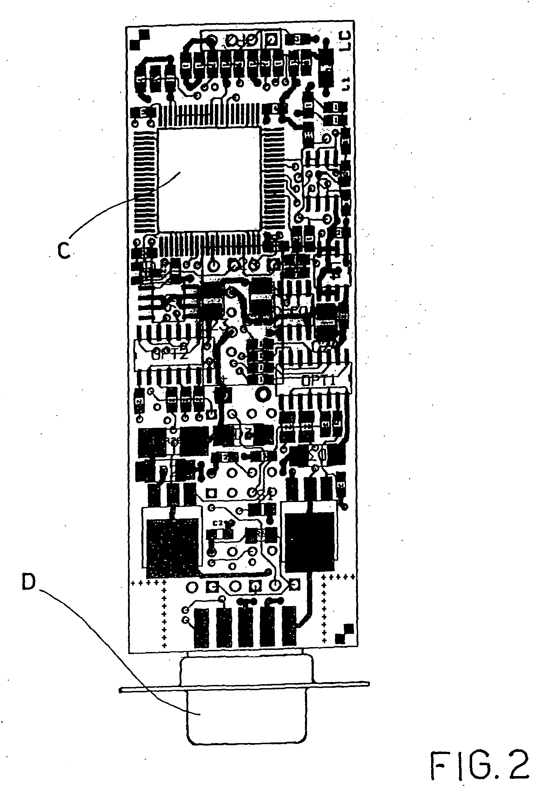

- Figure 2 shows a top view of the only electronic card, where the 16-bit Flash microcontroller C and the 9-pole connector D can be seen;

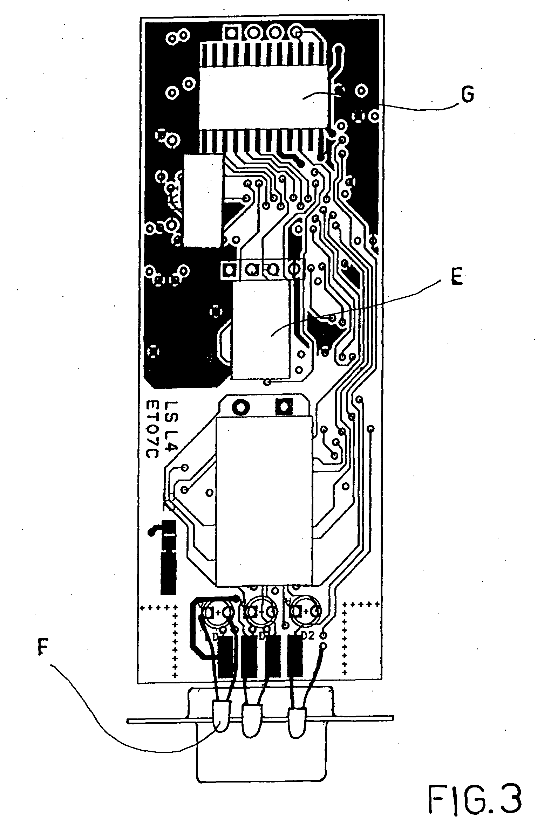

- Figure 3 shows a bottom view of the only electronic card, where the window acquisition chip composed of a 20-bit AD and a 4-bit DAC G, the DC/DC converter for the insulated power supply E and the three LEDs F can be seen;

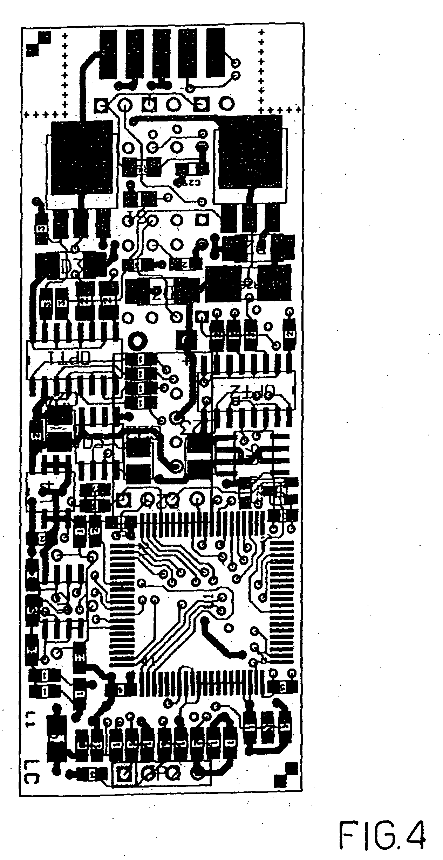

- Figure 4 shows the top side of the four-layer printed circuit, without components;

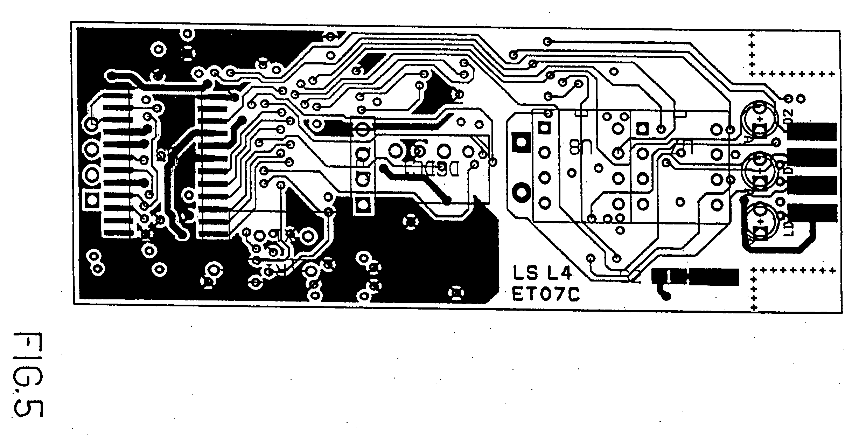

- Figure 5 shows the underside of the four-layer printed circuit, without components;

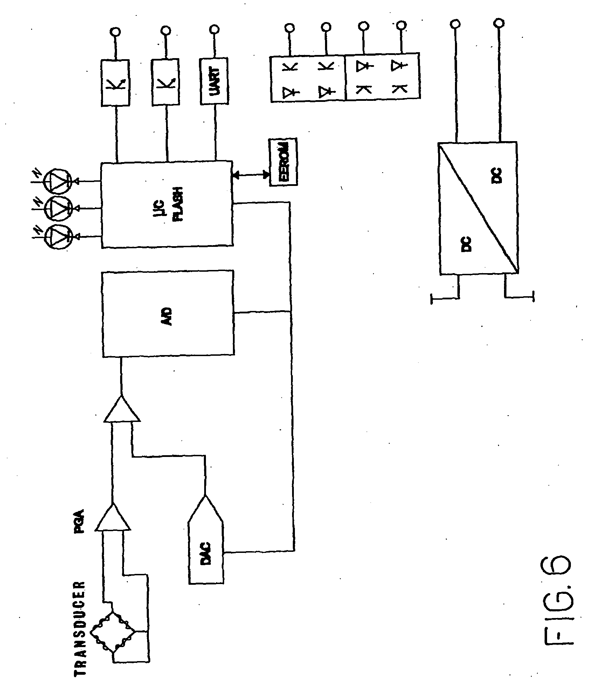

- Figure 6 shows a block diagram of the entire circuit. From this diagram it is possible to analyse the stratagem applied (measurement of the drop in windows realised through electric offset generation from a programmable DAC) in order to develop a resolution, during the leak measurement phase, of at least 100,000 (one hundred thousand) points with reference to the scale bottom of the maximum operating pressure;

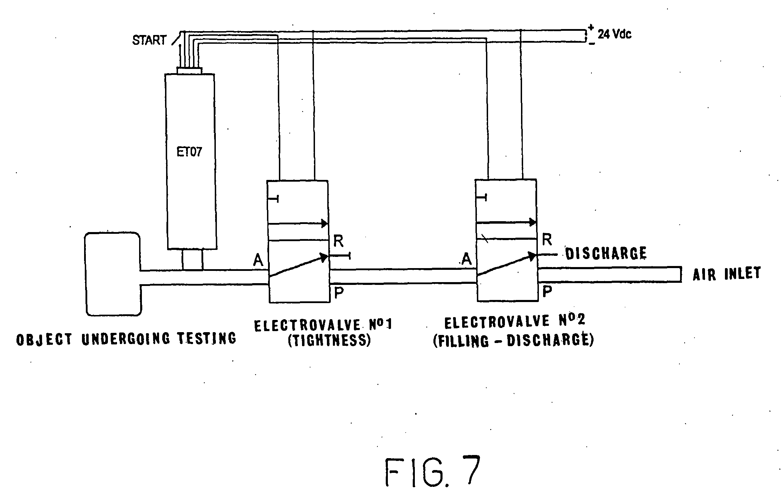

- Figure 7 shows the application of the sensor in question;

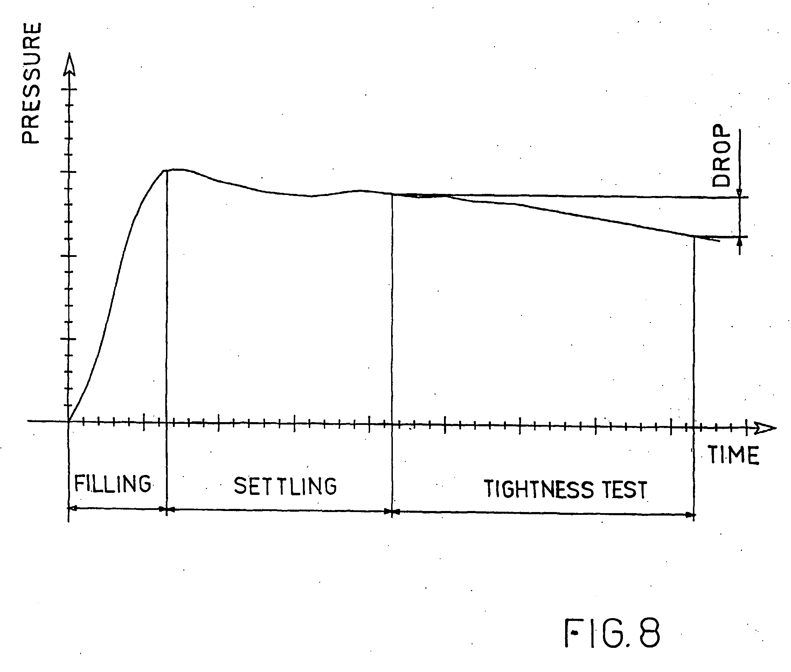

- Figure 8 shows the typical trend - which is regulated by the programmable parameters shown in figure 10 - of a tightness test cycle, highlighting the three phases into which each test is divided.

Therefore, during the first filling phase, the pressurisation valves are piloted; at the end of this phase there is a delay until the settling phase finishes, the said settling phase being necessary for the pressure to settle inside the part undergoing testing and, in the last phase, the actual tightness test is carried out, where a possible pressure drop due to a leak is analysed for a programmable time.

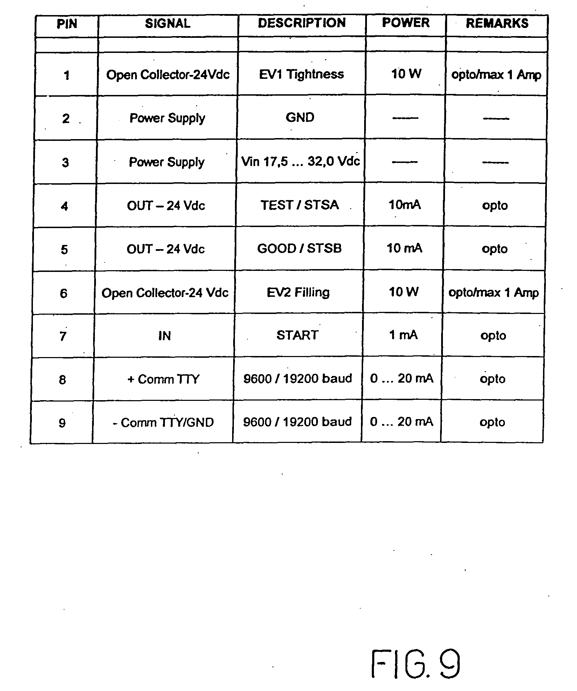

- Figure 9 shows the connection signals contained in connector D; and

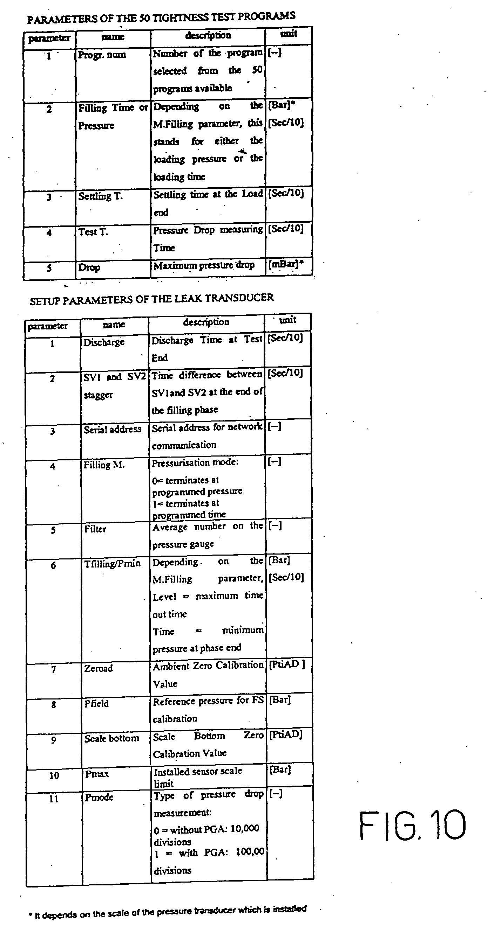

- Figure 10 shows the list of parameters programmable via the TTY serial line, and stored permanently in the sensor's EEROM memory.

## Claims

1. A sensor for the execution of tightness tests based on the absolute pressure drop principle for industrial use and use in plant engineering and in gas transmission networks, containing - within a single metal body - everything necessary, except the pressurisation solenoid valves, to execute the aforesaid tests completely autonomously, and therefore a pressure transducer (A) and management and processing circuit.

2. A sensor for the execution of tightness tests according to claim 1 **characterised by** the fact that the said sensor has resident software capable of executing the said test cycles as illustrated in Figure 8 and based on the execution and installation parameters shown in Figure 10.

3. A sensor for the execution of tightness tests according to claims 1 and 2 **characterised by** the presence of a multipoint serial port capable of communicating all the settings and status data to the special display element such as personal computer software or a microprocessor keypad or PLC.

4. A sensor for the execution of tightness tests according to claims 1, 2 and 3 **characterised by** the presence of a microprocessor with a firmware programme Flash memory and EEROM permanent memory containing operating parameters as shown in Figure 10, settable by means of a serial port.

5. A sensor for the execution of tightness tests according to claims 1, 2, 3 and 4 **characterised by** a measuring sensitivity during the tightness test phase equal to 100,000 (one hundred thousand) divisions if in relation to the maximum measuring pressure scale bottom.

6. A sensor for the execution of tightness tests according to claims 1, 2, 3, 4 and 5 **characterised by** the presence of three LEDs (Green, Red, Yellow) and intended to signal the course and result of the test synthetically.

7. A sensor for the execution of tests according to claims 1, 2, 3, 4, 5 and 6 **characterised by** a connector with at least nine signal lines, as shown in Figure 9.
